(19) Europäisches Patentamt European Patent Office Office européen des brevets

(11) **EP 4 546 458 A1**

(12) **EUROPEAN PATENT APPLICATION**
published in accordance with Art. 153(4) EPC

(43) Date of publication:
**30.04.2025 Bulletin 2025/18**

(21) Application number: **23880086.6**

(22) Date of filing: **05.10.2023**

(51) International Patent Classification (IPC):
*H01M 4/36* (2006.01)     *H01M 4/62* (2006.01)
*H01M 10/0562* (2010.01)     *H01M 10/052* (2010.01)
*H01M 4/02* (2006.01)

(52) Cooperative Patent Classification (CPC):
**H01M 4/02; H01M 4/36; H01M 4/62; H01M 10/052;
H01M 10/0562; Y02E 60/10**

(86) International application number:
**PCT/KR2023/015301**

(87) International publication number:
**WO 2024/085507 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.10.2022 KR 20220134725**

(71) Applicant: **LG Energy Solution, Ltd.
Seoul 07335 (KR)**

(72) Inventors:
• **KWON, Hyejin
Daejeon 34122 (KR)**
• **KIM, Sohee
Daejeon 34122 (KR)**
• **KIM, Jeonggil
Daejeon 34122 (KR)**
• **KIM, Taegon
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **POSITIVE ELECTRODE PARTICLES, AND POSITIVE ELECTRODE AND ALL-SOLID-STATE BATTERY COMPRISING SAME**

(57)     The present invention relates to positive electrode particles comprising a positive electrode active material layer comprising positive electrode active material particles, and a solid electrolyte layer surrounding the positive electrode active material layer, and comprising solid electrolyte particles, wherein the average size of the solid electrolyte particles is 10 to 20% of the average size of the positive electrode active material particles.

[Figure 1]

**Description**

[Technical Field]

This application claims the benefit of priority to Korean Patent Application No. 10-2022-0134725 filed on October 19, 2022, all contents of which are incorporated as a part of the present specification.

The present invention relates to positive electrode particles, and a positive electrode and an all-solid-state battery comprising same. More specifically, the present invention relates to positive electrode particles prepared by adjusting the sizes of the positive electrode active material particles and the solid electrolyte particles comprised in the positive electrode particles, and a positive electrode and an all-solid-state battery comprising same.

[Background Art]

Various batteries are being researched to overcome the limitations of current lithium secondary batteries in terms of capacity, safety, power output, enlargement and microminiaturization.

For example, metal-air batteries, which have a very large theoretical capacity compared to lithium secondary batteries, all-solid-state batteries, which do not have the risk of explosion in terms of safety, supercapacitors in terms of power output, NaS batteries or redox flow batteries (RFBs) in terms of enlargement, and thin film batteries in terms of microminiaturization are being continuously researched in academia and industry.

Among them, all-solid-state batteries are batteries that replace the liquid electrolyte conventionally used in lithium secondary batteries with the solid electrolyte, and since no flammable solvents are used in the batteries, there is no ignition or explosion conventionally caused by the decomposition reaction of the electrolyte, which can greatly improve safety. In addition, since a Li metal or Li alloy can be used as the negative electrode material, it has the advantage of dramatically improving the energy density per mass and volume of the battery.

In particular, among solid electrolytes for all-solid-state batteries, inorganic solid electrolytes can be categorized into sulfide-based and oxide-based electrolytes. The most technologically advanced solid electrolytes are currently sulfide-based solid electrolytes, and sulfide-based solid electrolyte materials with ionic conductivity close to that of organic electrolytes have been developed.

Meanwhile, since all-solid-state batteries use a solid electrolyte, unlike conventional lithium secondary batteries that use a liquid electrolyte, there is a problem that the solid electrolyte cannot easily penetrate into the pores of the electrode active layer, thereby making physical contact between the electrode active material and the solid electrolyte difficult.

In the process of manufacturing a positive electrode for an all-solid-state battery, the step of drying the solvent after slurry coating is necessary. A large amount of solvent is used to dissolve powdered materials such as binders, thickeners and dispersants. During the drying process of these solvents, the mobility of the binder dissolved in the solvent is appears, and the binder migrates within the electrode, and the binder migration is particularly pronounced in high-loading electrodes. The migration of binders in high-loading electrodes deteriorates the adhesion of the electrodes and leads to unevenness in the electrodes, which contributes to degradation of battery performance.

In addition, during the manufacturing process of the positive electrode for an all-solid-state battery, the density of the particles can increase, thereby producing packed areas with high density which causes degradation of battery performance.

[Prior art references].

[patent reference]

(Patent reference 1) Korean Patent Laid-open Publication No. 10-2018-0036631 (Publication Date: April 27, 2021)

[Disclosure]

[Technical Problem]

The present invention is proposed to address the above-described problem, and the present invention aims to provide positive electrode particles prepared by adjusting the size ratio of positive electrode active material particles and solid electrolyte particles.

[Technical Solution]

The positive electrode particles according to one embodiment includes a positive electrode active material layer comprising positive electrode active material particles, and a solid electrolyte layer surrounding the positive electrode active material layer and comprising solid electrolyte particles, wherein the average size of the solid electrolyte particles may be 10 to 20% of the average size of the positive electrode active material particles.

In one embodiment, the solid electrolyte particles may be sulfide-based solid electrolyte particles.

In one embodiment, the value of A obtained from Formula 1 below may be 0.25/micrometer or less.

$$[Formula\ 1]$$

$$A=Span/D50,$$

wherein the Span is (D90-D10)/(D50), and the units of D10, D50 and D90 are each in micrometers.

In one embodiment, when the surface of the positive electrode particle is observed in an image measured with a scanning electron microscope (SEM) at a magnification of 5,000x, the area forming faces is at least 20%, and the face may be a portion where no unevenness is formed in the image.

In one embodiment, the face may be defined as a portion having an area of at least $0.2\ cm^2$.

In one embodiment, the average size of the positive electrode active material particles may be from 4 to 6 micrometers in average particle diameter, and the average size of the solid electrolyte particles may be from 0.4 to 1.2 micrometers in average particle diameter.

The positive electrode according to one embodiment of the present invention may comprise the positive electrode particles of any one of the above-mentioned aspects.

The all-solid-state battery according to one embodiment of the present invention may include a positive electrode, a negative electrode comprising negative electrode particles, and the solid electrolyte particles disposed between the positive electrode and the negative electrode.

[Effects of the Invention]

The effect of the present invention is to increase the performance of a battery comprising positive electrode particles in a positive electrode comprising a positive electrode active material layer comprising positive electrode active material particles and a solid electrolyte layer comprising solid electrolyte particles, by manufacturing the positive electrode particles so that the size ratio of the positive electrode active material particles to the solid electrolyte particles is within a certain range.

[Description of Drawings]

FIG. 1 shows a scanning electron microscope (SEM) image of a positive electrode particle prepared in accordance with one embodiment of the present invention. The magnification of the image is ×5,000.

FIG. 2 is a drawing of the image in FIG. 1 showing the area where the faces are formed. The image is scaled to ×5,000.

[Best Mode]

The detail of the embodiment of the present invention is provided in the following descriptions. However, the following descriptions are to be understood as exemplary for the purpose of facilitating the understanding of the present invention, and are not to be understood as limiting or defining the present invention. Also, the present invention is not limited to the drawings attached hereto. One of ordinary skill in the art can realize the present invention in various forms within the scope of the technical ideas of the present invention with reference to the following descriptions and the drawings attached hereto.

Negative electrode

A negative electrode may include negative electrode particles. For example, a negative electrode may comprise a lithium metal. The negative electrode may be made of a pure lithium metal or a lithium alloy, or it may be used by applying and drying a negative electrode active material on the lithium metal.

The lithium metal may comprise at least one of a pure lithium, a lithium alloy and a lithium metal complex oxide.

The lithium alloy may comprise one selected from the group consisting of Al, Mg, K, Na, Ca, Sr, Ba, Si, Ge, Sb, Pb, In and Zn. The lithium metal complex oxide may be a metal (Me) oxide (MeO$_x$) of lithium and one selected from the group consisting of Si, Sn, Zn, Mg, Cd, Ce, Ni and Fe, such as Li$_x$Fe$_2$O$_3$ (wherein 0<0≤1) or Li$_x$WO$_2$ (wherein 0<x≤1).

The lithium metal according to the present invention may have a protective layer, like a lithium metal with a conventional electrolyte. The protective layer may comprise any material that is conductive to lithium ions, does not interfere with the operation of the battery, and does not react with lithium. Examples thereof include a garnet-type ceramic protective layer, a protective layer composed of lithium-substituted polyacrylic acid, and a molybdenum disulfide-based protective layer. Any protective layer can be used as long as it can improve the stability of the lithium metal.

The lithium metal is typically made with a thickness of 3 μm to 500 μm. The lithium metal can also form microscopic irregularities on the surface to strengthen the binding of the lithium metal to the negative electrode active material or solid electrolyte, and can be used in various forms such as films, sheets, foils, nets, porous materials, foams, non-woven materials, etc.

The negative electrode active materials include, for example, carbon such as anthracite or graphitized carbon; Li$_x$Fe$_2$O$_3$ (wherein 0≤x≤1), Li$_x$WO$_2$ (wherein 0≤x≤1), or Sn$_x$Me$_{1-x}$Me'$_y$O$_z$ (wherein Me is Mn, Fe or Pb or Ge; Me' is Al, B, P or Si, Group 1, 2 or 3 elements of the periodic table, or halogens; 0<x≤1; 1≤y≤3; and 1≤z≤8); lithium metals; lithium alloys; silicon-based alloys; tin-based alloys; metal oxides such as SnO, SnO$_2$, PbO, PbO$_2$, Pb$_2$O$_3$, Pb$_3$O$_4$, Sb$_2$O$_3$, Sb$_2$O$_4$, Sb$_2$O$_5$, GeO, GeO$_2$, Bi$_2$O$_3$, Bi$_2$O$_4$ or Bi$_2$O$_5$; conductive polymers such as polyacetylene; and Li-Co-Ni based materials.

## Solid electrolyte

The solid electrolyte may include solid electrolyte particles. The solid electrolyte particles may include at least one of sulfide-based solid electrolyte particles, oxide-based solid electrolyte particles, and organic solid electrolyte particles. The solid electrolyte according to the present invention may utilize particles with coated or modified surfaces. Sulfide-based solid electrolytes have advantages over other solid electrolytes in terms of ionic conductivity and production cost. Accordingly, the present invention provides following embodiments for using sulfide-based solid electrolytes.

The sulfide-based solid electrolyte has the advantages of high lithium ion conductivity of 10$^{-2}$ to 10$^{-3}$ S/cm, easiness to form a contact interface between the electrode and the electrolyte, and good mechanical strength and mechanical flexibility. The sulfide-based solid electrolyte powder contains sulfur (S) and has the ionic conductivity of a metal in Group 1 or 2 of the periodic table, and may include a Li-P-S-based glass or a Li-P-S-based glass ceramic. The sulfide-based solid electrolyte is not specifically limited by the present invention, and any sulfide-based material known for use in lithium battery applications may be used. For example, sulfide-based solid electrolytes include Li$_6$PS$_5$Cl(LPSCl), Li$_6$PS$_5$Br(LPSClBr), Thio-LISICON(Li$_{3.25}$Ge$_{0.25}$P$_{0.75}$S$_4$), Li$_2$S-P$_2$S$_5$-LiCl, Li$_2$S-SiS$_2$, LiI-Li$_2$S-SiS$_2$, LiI-Li$_2$S-P$_2$S$_5$, LiI-Li$_2$S-P$_2$O$_5$, LiILi$_3$PO$_4$-P$_2$S$_5$, Li$_2$S-P$_2$S$_5$, Li$_3$PS$_4$, Li$_7$P$_3$S$_{11}$, LiI-Li$_2$S-B$_2$S$_3$, Li$_3$PO$_4$-Li$_2$S-Si$_2$S, Li$_3$PO$_4$-Li$_2$S-SiS$_2$, Li-PO$_4$-Li$_2$S-SiS, Li$_{10}$GeP$_2$S$_{12}$, Li$_{9.54}$Si$_{1.74}$P$_{1.44}$S$_{11.7}$Cl$_{0.3}$, and Li$_7$P$_3$S$_{11}$.

The thickness of the solid electrolyte can be selected depending on the desired characteristics of the battery. For example, the thickness when densified by pressing may preferably be from about 0.1 μm to 1000 μm, more preferably from about 1 μm to 100 μm, and even more preferably from about 10 μm to 50 μm.

## Positive electrode

The positive electrode may comprise a plurality of positive electrode particles. The positive electrode may be manufactured, for example by applying a positive electrode mixture made by mixing a positive electrode active material layer comprising positive electrode active material particles, a solid electrolyte layer comprising solid electrolyte particles surrounding the positive electrode active material layer, a conductive material and a binder, to a positive electrode current collector, and a filler may be further added to the positive electrode mixture, as needed.

The positive electrode current collector is generally manufactured with a thickness of about 3 μm to 500 μm, and is not particularly limited as long as it has a high conductivity without causing any chemical changes in the battery, for example, one selected from stainless steel, aluminum, nickel, titanium, and the aluminum or stainless steel whose surface is treated with carbon, nickel titanium, or silver, and specifically, aluminum may be used. The current collector may also have microscopic irregularities formed on its surface to increase the adhesion of the positive electrode active material, and may be in the form of a film, sheet, foil, net, porous material, foam, non-woven material, or the like.

In addition to the positive electrode active material particles, the positive electrode active material can comprise, but is not limited to, a layered compound such as lithium nickel oxide (LiNiO$_2$) or a compound substituted with one or more transition metals; a lithium manganese oxide represented by formula Li$_{1+x}$Mn$_{2-x}$O$_4$ (wherein x is 0 to 0.33), LiMnO$_3$, LiMn$_2$O$_3$ or LiMnO$_2$; lithium copper oxides (Li$_2$CuO$_2$); vanadium oxides, such as LiV$_3$O$_8$, LiV$_3$O$_4$, V$_2$O$_5$ or Cu$_2$V$_2$O$_7$; Ni site-type lithium nickel oxide represented by LiNi$_{1-x}$M$_x$O$_2$ (wherein M is Co, Mn, Al, Cu, Fe, Mg, B or Ga, and x is 0.01 to 0.3); lithium manganese complex oxides represented by formula LiMn$_{2-x}$M$_x$O$_2$ (wherein M is Co, Ni, Fe, Cr, Zn or Ta, and x is 0.01 to 0.1) or Li$_2$Mn$_3$MO$_8$ (wherein M is Fe, Co, Ni, Cu or Zn); LiMn$_2$O$_4$, wherein a portion of the Li is substituted by an alkaline earth metal ion; disulfide compounds; and $Fe_2(MoO_4)_3$. For example, the positive electrode active material may comprise NCM811($LiNi_{0.8}Co_{0.1}Mn_{0.1}O_2$).

The conductive material may typically be added in an amount of 0.1 to 30 wt%, based on the total weight of the mixture comprising the positive electrode active material. The materials are not particularly limited, as long as they are conductive without causing any chemical changes in the battery, for example, graphite such as natural or artificial graphite; carbon black such as carbon black, acetylene black, Ketjen black, channel black, furnace black, lamp black or thermal black; conductive fibers such as carbon fibers or metal fibers; carbon fluoride; metal powders such as aluminum or nickel powder; conductive whiskers such as zinc oxide or potassium titanate; conductive metal oxides such as titanium oxide; or conductive materials such as polyphenylene derivatives. For example, carbon nanofiber (CNF) may be used as the conductive material.

The binder included in the positive electrode is a component that assists in the bonding of the active material to the conductive material and the bonding to the current collector, and is typically added in an amount of 0.1 to 30 wt% based on the total weight of the mixture comprising the positive electrode active material. Due to the addition of the binder, the bonding of the positive electrode to the solid electrolyte can also be increased.

The binders are not particularly limited in this specification, and known methods may be used. The binders can be any one or mixture of two or more selected from the group consisting of polyamide-imide (PAI), polyimide (PI), polyamide (PA), polyamic acid, polyethylene oxide (PEO), polystyrene (PS), PEP-MNB (poly(ethylene-copropyleneco-5-methylene-2-norbornene), VDF (polyvinylidene fluoride), PVDF-HFP (poly(vinylidene fluoride-co-hexafluoropropylene)), PS-NBR (polystyrene nitrile-butadiene rubber), PMMANBR (poly(methacrylate)nitrile-butadiene rubber), and combinations thereof.

The surface of the positive electrode active material layer may be coated with a material such as $LiNbO_3$ to form a buffer layer. The buffer layer can be formed with a buffer layer forming material of 10 nm or less to suppress the interfacial resistance between the positive electrode and the solid electrolyte.

The size of the positive electrode active material particles and the solid electrolyte particles present in the positive electrode may vary, but in the present invention, a densely and uniformly arranged positive electrode can be obtained by adjusting the size of the positive electrode active material particles and the solid electrolyte particles.

For example, the average size of the solid electrolyte particles may be about 10 to 20% of the average size of the positive electrode active material particles. The average size of the positive electrode active material particles may be about 4 $\mu$m to 6 $\mu$m, and the average size of the solid electrolyte particles may be about 0.4 $\mu$m to 1.2 $\mu$m. The average size as defined above indicates an average diameter, which is the average particle size as defined by D50.

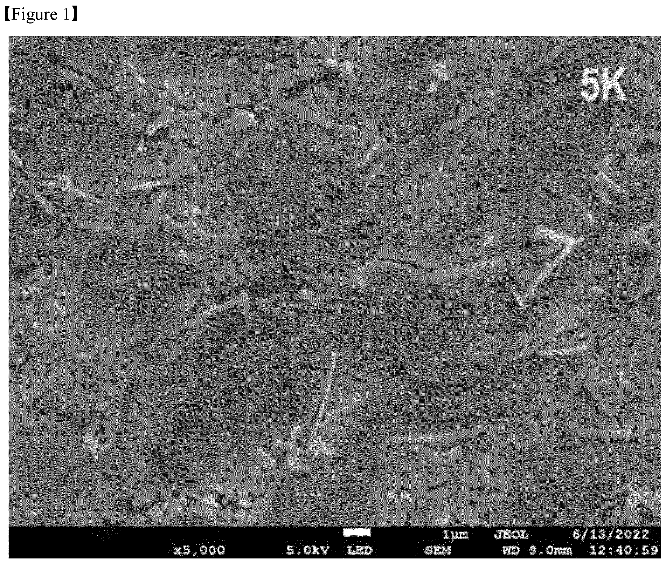

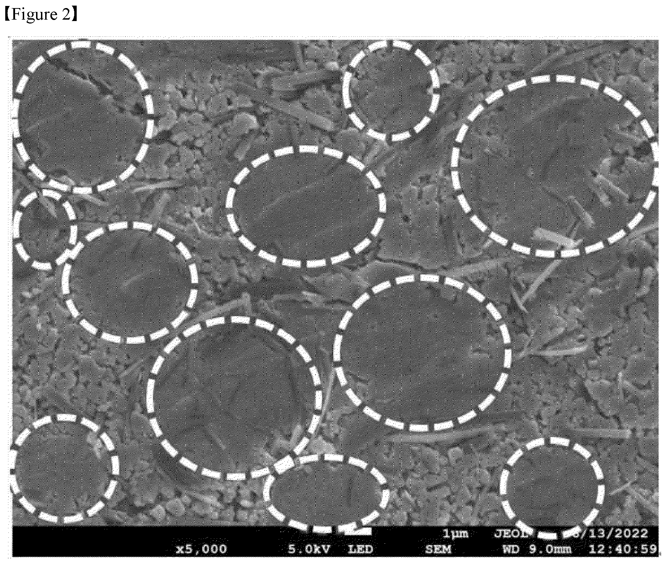

FIG. 1 shows a scanning electron microscope (SEM) image of a positive electrode particle prepared in accordance with one embodiment of the present invention. The image has a magnification of x5,000. FIG. 2 is a diagram showing a region in FIG. 1 in which faces are formed. The image has a magnification of ×5,000.

Referring to FIGS. 1 and 2, when observing an image of a positive electrode particle taken under a scanning electron microscope at x5,000 magnification, it can be seen that the area forming a face (see the dotted circle in FIG. 2) accounts for about 20% or more of the total area. The area forming the face refers to a smooth face in the image. The smooth face is defined as a surface that does not have any unevenness or protrusions in the image. In other words, it is a part where no protrusions are present in the image. The face may be defined as the face on which the solid electrolyte particles have been flattened under pressure in the manufacture of the positive electrode particles. When the positive electrode active material particles and the solid electrolyte are mixed and then dispersed, the positive electrode particles may be manufactured so that the solid electrolyte covers the surface of the positive electrode active material particles, and the flat face may be formed by applying pressure. A large number of flat faces on the positive electrode particles means that there are many areas where pressure is properly applied, which means that the positive electrode particles are densely packed and ion paths are well formed on the positive electrode particles. The area of 0.2 cm² or more only may be defined as a face.

If the area forming the face is less than 20% of the total area, the positive electrode particles may have a lower packing density and the ion paths may not be formed to the desired extent. The area forming the face shall be at least 20%, preferably at least 30%, and more preferably at least 35% of the total area.

The area forming the face may preferably be 80% or less, more preferably 75% or less, and still more preferably 70% or less of the total area. The face is an area where the solid electrolyte is flattened under pressure, as described above, but, due to the positive electrode active material particles in the form of particles, the positive electrode active material particles should be used in less amounts in order to flatten the surface of the positive electrode particles by more than 80%. Therefore, in order to prevent degradation of the positive electrode particles, the face is preferably 80% or less of the total area.

In the embodiment of the present invention, the width of the region forming the face in the image is preferably 20% or more of the total area. In FIG. 2, the total area is 20 cm² and the width of the area forming the face is 9.10 cm². The width ratio of the area forming the face in FIG. 2 is 45.5% of the total area, thus satisfying the embodiment of the present invention.

Preferably, the positive electrode particles are manufactured to have a value expressed by [Formula 1].

[Formula 1]

$$0.03/\mu m \leq Span/D50 \leq 0.25/\mu m,$$

wherein the Span value may be defined by the average size of the positive electrode particles as a variable, for example, the Span value may be defined by the average diameter as a variable. Specifically, the Span value is defined as (D90-D10)/D50, with a value less than 1.

When the value of Span/D50 is greater than $0.25/\mu m$, the Span value is large and the diameter (D50) of the positive electrode particles is small, which may increase the fine particles, thereby reducing the packing density of the electrode. When the value of Span/D50 is less than $0.03/\mu m$, the positive electrode particles have a smaller Span value, and the diameter (D50) of the positive electrode particles becomes larger, so that the high rate discharge may be at a disadvantage. The units of D10, D50, and D90 are each $\mu m$.

Since the positive electrode particles according to one embodiment of the present invention are prepared by mixing solid electrolyte particles having an average size of 10 to 20% relative to the average size of the positive electrode active material particles, positive electrode particles which are uniform and have improved density can be obtained. When the solid electrolyte having a smaller average size than the average size of the positive electrode active material is applied, the specific surface area of the solid electrolyte that can adhere to the periphery of the positive electrode active material is increased, and the structure of the positive electrode particles and the cell performance can be improved. However, if the particle size difference between the positive electrode active material and the solid electrolyte becomes too large, dispersion becomes difficult, so there is a limit to reducing the size of the solid electrolyte particles.

Since the descriptions on each composition included in the electrode for an all-solid-state battery according to one embodiment of the present invention are also applicable to the descriptions of the method of manufacturing the electrode for an all-solid-state battery according to one embodiment of the present invention, the detail descriptions are omitted herein.

Hereinafter, Examples are presented to facilitate an understanding of the present invention. The following Examples are provided to illustrate the present invention, but the present invention is not limited thereto.

Example 1

Example 1 prepared positive electrode particles with an average size of solid electrolyte particles of 12% relative to the average size of electrode active material particles by mixing electrode active material (NCM811), electrolyte (LPSCl), and conductive material (CNF) in a weight ratio of 60 wt%:35 wt%:5 wt% (electrode active material : electrolyte : conductive material).

**Comparative Example 1**

Comparative Example 1 prepared positive electrode particles with an average size of solid electrolyte particles of 32% relative to the average size of electrode active material particles by mixing electrode active material (NCM811), electrolyte (LPSCl), and conductive material (CNF) in a weight ratio of 60 wt%:35 wt%:5 wt% (electrode active material : electrolyte : conductive material).

**Comparative Example 2**

Comparative Example 2 prepared positive electrode particles with an average size of solid electrolyte particles of 6.7% relative to the average size of electrode active material particles by mixing electrode active material (NCM811), electrolyte (LPSCl), and conductive material (CNF) in a weight ratio of 60 wt%:35 wt%:5 wt% (electrode active material : electrolyte : conductive material).

**Comparative Example 3**

Comparative Example 3 prepared positive electrode particles with an average size of solid electrolyte particles of 20% of the average size of electrode active material particles by mixing electrode active material (NCM811), electrolyte (LPSCl), and conductive material (CNF) in a weight ratio of 60 wt%:35 wt%:5 wt% (electrode active material : electrolyte : conductive material).

**Experimental Example 1: Measurement of the area that forms faces**

The performances of the positive electrode particles according to the working examples and comparative examples are shown in Table 1 below.

[Table 1]

| | | Average size of solid electrolyte particles (um) | Average size of electrode active material particles (um) | Span value | Span/D50 value (/um) | Percentage of faceforming area | 1st Efficiency (%) | 1.0C rate(%) |
|---|---|---|---|---|---|---|---|---|
| Example | 1 | 0.6 | 5 | 0.7 | 0.14 | 45 | 94 | 90 |
| Comparative example | 1 | 1.6 | 5 | 0.7 | 0.14 | 15 | 89 | 75 |
| | 2 | 0.6 | 9 | 0.4 | 0.04 | 5 | 90 | 82 |
| | 3 | 0.6 | 3 | 1.4 | 0.47 | 10 | 92 | 74 |

Referring to Table 1, the ratio of the average size of the positive electrode active material particles to the average size of the solid electrolyte particles of the positive electrode particles according to the comparative examples falls outside the scope of the present invention. It is confirmed that the ratio of the average size of the electrode active material particles to the average size of the solid electrolyte particles according to Example 1 is 12%, which falls within the scope of the present invention, and the performance of the positive electrode particles is superior compared to the those of comparative examples.

In Comparative Example 3, the average size of the solid electrolyte is 20% of the average size of the positive electrode active material, but the Span value exceeds 1, resulting in a decrease in charge/discharge efficiency or rate compared to Example 1.

One embodiment and specific embodiments of the present invention are exemplarily provided in the foregoing descriptions, but these shall be understood to be for the purpose of illustrating the present invention and shall not be construed as limiting the embodiments of the present invention. Those skilled in the art can make appropriate modifications to the embodiments and examples of the present invention by omitting, changing or substituting all or some components, or adding other components, with reference to this specification and the drawings attached hereto, within the scope of the technical ideas of the present invention. Accordingly, the scope for which protection is sought shall be construed in accordance with the following claims, and all technical ideas within the same scope shall be construed to be included in the scope for which protection is sought in the present invention.

All terms and expressions used in this specification are to be understood by one of ordinary skill in the art, unless otherwise defined. Further, the terms and expressions used in this specification are to be construed broadly and are not to be construed in a restrictive sense.

In this specification, the expression "comprise" does not exclude the existence or addition of one or more other components in addition to the mentioned components.

In addition, expressions of the singular form are intended to include the plural form, unless the plural form is explicitly excluded in the context.

Each of the exemplary embodiments described herein can be combined with each other, and unless inconsistent, what is described in a particular embodiment may also be applicable to other embodiments, even if not described therein.

**Claims**

1. Positive electrode particles comprising

   a positive electrode active material layer comprising positive electrode active material particles; and
   a solid electrolyte layer surrounding the positive electrode active material layer, and comprising solid electrolyte particles,
   wherein the average size of the solid electrolyte particles is from 10 to 20% of the average size of the positive electrode active material particles.

2. The positive electrode particles according to claim 1, wherein the solid electrolyte particles are sulfide-based solid electrolyte particles.

3. The positive electrode particles according to claim 1, wherein an A value obtained from the following [Formula 1] is 0.25/micrometer or less:

$$[\text{Formula 1}].$$

$$A = \text{Span}/D50$$

wherein the Span is (D90-D10)/(D50), and the units of the D10, D50, and D90 are each micrometers.

4. The positive electrode particles according to claim 1, wherein, when the surface of the positive electrode particle is observed by an image measured with a scanning electron microscope (SEM) at a magnification of x5,000, the area forming a face is 20% or more of the total area, and the face is a portion in which no unevenness is formed in the image.

5. The positive electrode particles according to claim 4, wherein the face is defined as a portion having an area of at least 0.2 cm$^2$.

6. The positive electrode particles according to claim 1, wherein the average size of the positive electrode active material particles is 4 to 6 micrometers with an average particle diameter, and the average size of the solid electrolyte particles is from 0.4 to 1.2 micrometers with an average particle diameter.

7. A positive electrode comprising the positive electrode particles of any one of claims 1 to 6.

8. An all-solid-state battery, comprising a positive electrode according to claim 7; a negative electrode containing negative electrode particles; and the solid electrolyte particles disposed between the positive electrode and the negative electrode.

【Figure 1】

【Figure 2】

<div align="center">

**INTERNATIONAL SEARCH REPORT**

</div>

| International application No. |
|---|
| **PCT/KR2023/015301** |

**A. CLASSIFICATION OF SUBJECT MATTER**

**H01M 4/36**(2006.01)i; **H01M 4/62**(2006.01)i; **H01M 10/0562**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 10/40(2006.01); H01M 2/18(2006.01); H01M 4/13(2010.01); H01M 4/139(2010.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극(cathode), 고체 전해질(solid electrolyte), 입자 크기(particle size), 밀도(density)

**C. DOCUMENTS CONSIDERED TO BE RELEVANT**

| Category* | Citation of document, with indication, where appropriate, of the relevant passages | Relevant to claim No. |
|---|---|---|
| X | JP 2015-069795 A (TOYOTA MOTOR CORP.) 13 April 2015 (2015-04-13) See claim 1; and paragraphs [0005], [0006], [0017]-[0022], [0048], [0071] and [0084]. | 1,2,4-8 |
| Y | | 3 |
| Y | KR 10-2022-0130112 A (SUMITOMO CHEMICAL CO., LTD.) 26 September 2022 (2022-09-26) See claim 1. | 3 |
| A | JP 2006-261041 A (NISSAN MOTOR CO., LTD.) 28 September 2006 (2006-09-28) See entire document. | 1-8 |
| A | KR 10-2022-0127242 A (SUMITOMO CHEMICAL CO., LTD.) 19 September 2022 (2022-09-19) See entire document. | 1-8 |
| A | KR 10-2014-0014361 A (SUMITOMO ELECTRIC INDUSTRIES, LTD.) 06 February 2014 (2014-02-06) See entire document. | 1-8 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 January 2024** | **15 January 2024** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015301**

| Patent document cited in search report | | | Publication date (day/month/year) | Patent family member(s) | | | Publication date (day/month/year) |
|---|---|---|---|---|---|---|---|
| JP | 2015-069795 | A | 13 April 2015 | CN | 105580169 | A | 11 May 2016 |
| | | | | CN | 105580169 | B | 27 March 2018 |
| | | | | JP | 5742905 | B2 | 01 July 2015 |
| | | | | US | 2016-0218349 | A1 | 28 July 2016 |
| | | | | WO | 2015-045921 | A1 | 02 April 2015 |
| KR | 10-2022-0130112 | A | 26 September 2022 | CN | 115023831 | A | 06 September 2022 |
| | | | | EP | 4091989 | A1 | 23 November 2022 |
| | | | | JP | 2021-114407 | A | 05 August 2021 |
| | | | | JP | 6780140 | B1 | 04 November 2020 |
| | | | | US | 2023-0048124 | A1 | 16 February 2023 |
| | | | | WO | 2021-145431 | A1 | 22 July 2021 |
| JP | 2006-261041 | A | 28 September 2006 | JP | 5176262 | B2 | 03 April 2013 |
| KR | 10-2022-0127242 | A | 19 September 2022 | CN | 114982015 | A | 30 August 2022 |
| | | | | EP | 4092784 | A1 | 23 November 2022 |
| | | | | JP | 2021-114406 | A | 05 August 2021 |
| | | | | JP | 6734491 | B1 | 05 August 2020 |
| | | | | US | 2023-0118425 | A1 | 20 April 2023 |
| | | | | WO | 2021-145438 | A1 | 22 July 2021 |
| KR | 10-2014-0014361 | A | 06 February 2014 | CN | 102449814 | A | 09 May 2012 |
| | | | | EP | 2437332 | A1 | 04 April 2012 |
| | | | | EP | 2437332 | A4 | 22 January 2014 |
| | | | | US | 2012-0052383 | A1 | 01 March 2012 |
| | | | | WO | 2010-137381 | A1 | 02 December 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220134725

- KR 1020180036631